# EUROPÄISCHE PATENTSCHRIFT

(11) **EP 0 566 820 B1**
(45) Veröffentlichungstag und Bekanntmachung des Hinweises auf die Patenterteilung: **18.10.1995**
(21) Anmeldenummer: 93100389.1
(22) Anmeldetag: 13.01.1993
(51) Int. Cl.: B44C 1/17, C04B 41/51, C04B 41/52

(54) **Verfahren zum Dekorieren von silicatischen Gegenständen mit Edelmetall**
Process for decorating silica objects with precious metals
Méthode pour la décoration des articles en silice avec des métaux précieux

(30) Priorität: 21.04.1992 DE 4213041
(43) Veröffentlichungstag der Anmeldung: 27.10.1993
(73) Patentinhaber: W.C. Heraeus GmbH, D-63450 Hanau (DE)
(72) Erfinder: Wild, Wolfgang, W-6450 Hanau am Main (DE); Werner, Günter, W-8648 Tettau (DE); Landgraf, Günter, W-6450 Hanau am Main (DE)
(74) Vertreter: Kühn, Hans-Christian

(56) Entgegenhaltungen:
- EP-A- 0 240 720
- DE-B- 1 247 191
- DE-C- 4 122 131
- GB-A- 2 099 760

## Beschreibung

Die Erfindung betrifft ein Verfahren zum Dekorieren von silicatischen Gegenständen mit Edelmetall unter Aufdrucken eines Glanzedelmetallpräparats und Brennen.

Zum Verzieren von Gebrauchsgegenständen aus Glas, Porzellan, Bone China, Vitreous China, Steingut und Keramik, wie Trinkgläser, Tafelgeschirr und Fliesen, werden neben Farben auch Edelmetalle benutzt. Die Edelmetalle bilden dabei dünne Schichten, die als Dekor die Oberfläche der Gegenstände ganz oder teilweise bedecken.

Für die Herstellung der Edelmetall-Dekorationen werden Glanzedelmetallpräparate, wie Glanzgold, Glanzplatin und Glanzpalladium, Polieredelmetallpräparate, wie Poliergold, Seidenmattedelmetallpräparate, wie Seidenmattgold, und Edelmetalle in Puderform, wie Pudergold, verwendet. Die Edelmetallpräparate werden auf den zu verzierenden Gegenstand in den Dekor bildender Weise aufgetragen, zum Beispiel auf drucktechnischem Wege, und eingebrannt. Ist beispielsweise aufgrund ihrer Form das direkte Bedrucken der Gegenstände erschwert, so können die Edelmetallpräparate mit Hilfe von keramischen Abziehbildern auf die Gegenstände aufgebracht werden. Ein Abziehbild dieser Art ist aus der deutschen Patentschrift 12 32 168 bekannt. Es besteht aus einem gummierten Papier als Träger, einer Bildschicht aus einem Glanzgoldpräparat, einer Schutzschicht aus ein Alkyd-, Phenol-, Harnstoff- oder Epoxidharz und ein trocknendes oder halbtrocknendes Öl enthaltendem Material und einer Überzugsschicht.

Glanzgoldpräparate enthalten 6 bis 20 Gewichts-% Gold in Form des in organischen Verarbeitungsmitteln gelösten Sulforesinats und ergeben nach dem Brennen bei etwa 500 bis 900°C hochglänzende Dekorationen, die nachträglich nicht poliert zu werden brauchen.

Poliergolde enthalten 12 bis 50 Gewichts-% Gold in Form feiner Gold-Pulver und/oder schwerlöslicher Goldverbindungen, dispergiert in organischen Verarbeitungshilfsmitteln oder in Glanzgold-Lösungen. Durch Polieren bekommt das nach dem Brand zunächst beigefarben stumpfe Poliergold einen schönen goldfarbenen Seidenglanz.

Seidenmattgoldpräparate enthalten zwar wie die Glanzgolde lösliche organische Goldverbindungen, ergeben aber, ohne daß sie nach dem Einbrennen poliert zu werden brauchen, den Poliergold-Dekorationen ähnliche Dekorationen (siehe zum Beispiel US-Patentschrift 4 418 099).

Die aufgrund ihres hohen Gold-Gehaltes kostbarsten Goldpräparate, die Pudergolde, führen zu massivgoldenen Dekorationen mit feinem mattem Aussehen.

Um mit nur einem Goldpräparat Dekorationen, deren Goldfläche Schattierungen oder Zeichnungen aufweist, zu erhalten, ist es bekannt, bei der Herstellung der Dekorationen zusätzlich eine sogenannte Mattfarbe zu verwenden. Dabei wird zunächst die Mattfarbe in der gewünschten Zeichnung auf den zu verzierenden Gegenstand aufgetragen und eingebrannt; dann erst wird das Goldpräparat, die Zeichnung bedeckend, in die Dekorfläche bildender Weise aufgetragen und ebenfalls eingebrannt.

Mit einem einmaligen Dekorationsbrand kommt das in der deutschen Auslegeschrift 1 247 191 beschriebene Verfahren zur Herstellung eines in sich gemusterten Golddekors aus. Dabei wird die Mattfarbe nicht als Unterlage verwendet, sondern auf eine aus poliertem Goldstaub bestehende Schicht in dem gewünschten Muster aufgebracht und gemeinsam mit der Goldschicht in einem einzigen Prozeß so eingebrannt, daß der Goldstaub durch die Mattfarbe durchschlägt.

Ein Alkydharz enthaltende Mattunterlagepräparate, die unter Glanzgoldpräparaten angeordnet und gemeinsam mit diesen zu Gold-Dekorationen mit feiner matter Oberfläche eingebrannt werden, sind aus den deutschen Patentschriften 31 22 546 und 40 07 156 bekannt. Wird das Mattunterlagepräparat in einer Zeichnung oder in einem Muster auf den zu verzierenden Gegenstand und anschließend das Glanzgoldpräparat in die Dekorfläche bildender Weise aufgetragen und der Gegenstand gebrannt, so bildet sich eine damastartig aus glänzenden und matten Flächenelementen zusammengesetzte Gold-Dekoration.

Der vorliegenden Erfindung liegt die Aufgabe zugrunde, ein Verfahren zum Dekorieren von silicatischen Gegenständen unter Aufdrucken eines Glanzedelmetallpräparats und Brennen zu finden, mit dem sich, ohne daß die Mitverwendung einer Mattfarbe oder eines Mattunterlagepräparats erforderlich ist, durch einmaliges Brennen damastartig in sich gemusterte Edelmetalldekors hergestellt werden können. Das Verfahren soll sowohl direkt als auch indirekt über Abziehbilder erfolgen können. Im Sinne der Erfindung sind silicatische Gegenstände solche aus Glas, glasiertem Porzellan, Bone China, Vitreous China, glasiertem Steingut oder glasierter Keramik.

Die Aufgabe wird erfindungsgemäß dadurch gelöst, daß auf die Gegenstände direkt oder über ein Abziehbild das Glanzedelmetallpräparat in die Dekorfläche bedeckender Weise und auf die Dekorfläche ein Seidenmattedelmetallpräparat als Muster aufgebracht und die Gegenstände bei 500 bis 900°C gebrannt werden.

Erfindungsgemäß wird die Aufgabe auch dadurch gelöst, daß auf die Gegenstände direkt oder über ein Abziehbild ein Seidenmattedelmetallpräparat in das Muster bildender Weise und das Glanzedelmetallpräparat in das Muster und die Dekorfläche bedeckender Weise aufgebracht und die Gegenstände bei 500 bis 900°C gebrannt werden.

Für das erfindungsgemäße Verfahren eignen sich handelsübliche Glanzedelmetall- und Seidenmattedelmetallpräparate. Besonders bewährt hat sich das Verfahren, wenn Glanzgold-, Glanzplatin- und Glanzplatin/Glanzpalladiumpräparate und Seidenmattgold- und Seidenmattplatinpräparate angewendet werden. Zur Bildung der Muster können letztere sowohl in positiver als auch in negativer Form auf die Gegenstände beziehungsweise das Abziehbild-Trägerpapier aufgedruckt werden.

Die nach dem erfindungsgemäßen Verfahren als Verzierung auf silicatischen Gegenständen aufgebrachten gemusterten Edelmetall-Dekors zeichnen sich durch eine besondere Brillanz der Edelmetallfarben und durch konturenscharfe Abgrenzungen der sie in damastähnlicher Weise bildenden glänzenden und matten Dekorelemente aus.

Überraschenderweise können mit Hilfe des erfindungsgemäßen Verfahrens je nach Wahl und Anordnung der Glanz- und Seidenmattpräparate Edelmetall-Dekorationen mit ganz neuen Glanz- und Farbeffekten geschaffen werden. So zeichnen sich zum Beispiel die durch die gemeinsame Verwendung von Glanzplatin- und Seidenmattgoldpräparaten oder von Glanzgold- und Seidenmattplatinpräparaten erhaltenen Edelmetall-Dekorationen durch eine besondere auf kontrastreichen Glanzeffekten und feinen Farbnuancen beruhende Eleganz aus.

Die für das Verfahren benutzten Abziehbilder, deren Bildschicht aus die Dekorfläche bildendem Glanzedelmetallpräparat und darüber oder darunter angeordnetem, das Muster bildendem Seidenmattedelmetallpräparat besteht, werden in an sich bekannter Weise hergestellt und auf die Gegenstände übertragen,

Zur näheren Erläuterung werden in den folgenden Beispielen das Dekorieren von glasierten Porzellan- und Keramik-Gegenständen nach dem erfindungsgemäßen Verfahren sowohl unter direktem Aufdrucken der Edelmetallpräparate als auch unter Übertragung der Edelmetallpräparate mit Hilfe von Abziehbildern und die Herstellung der Abziehbilder beschrieben.

### Beispiel 1

Auf eine Fliese aus glasierter Keramik wird unter Verwendung eines Polyestergewebes mit 130 Fäden/cm als Drucksieb die Dekorfläche mit einem pastenförmigen Glanzgoldpräparat (Citrongold) gedruckt. Nach dem Trocknen des Präparats bis zur Griffestigkeit wird auf die Dekorfläche das Muster aus einem pastenförmigen Seidenmattgoldpräparat (Citrongold) unter Verwendung eines Polyestergewebes mit 100 Fäden/cm als Drucksieb gedruckt. Anschließend wird die Fliese bei etwa 800°C gebrannt. Die erhaltene Gold-Dekoration weist einen kontrastreichen Matt/Glanzeffekt auf; sowohl die matten als auch die glänzenden Dekorelemente sind citrongoldfarbig.

### Beispiel 2

Zur Herstellung eines keramischen Abziehbildes wird auf einen Träger aus gummiertem Papier ein pastenförmiges Seidenmattgoldpräparat (Citrongold) unter Verwendung eines Drucksiebes aus Polyestergewebe mit 100 Fäden/cm als Muster aufgedruckt. Nach dem Antrocknen wird ein pastenförmiges Glanzplatinpräparat unter Verwendung eines Drucksiebes aus Polyestergewebe mit 130 Fäden/cm als Dekorfläche über das Seidenmattgold-Muster gedruckt. Zum Schluß, nach dem Antrocknen des Glanzplatinpräparats, wird auf das Dekorbild ein Siebdrucklack durch ein Drucksieb aus Polyestergewebe mit 32 Fäden/cm aufgebracht. Ist der Siebdrucklack angetrocknet, so wird das Abziehbild auf einen Teller aus glasiertem Porzellan übertragen und bei etwa 820°C eingebrannt. Die erhaltene Edelmetall-Dekoration mit kontrastreichem Matt/Glanz-Effekt besteht aus glänzenden platinfarbigen und matten roségoldfarbigen Dekorelementen.

### Beispiel 3

Zur Herstellung eines keramischen Abziehbildes wird auf einen Träger aus gummiertem Papier ein pastenförmiges Glanzgoldpräparat (Citrongold) unter Verwendung eines Drucksiebes aus Polyestergewebe mit 130 Fäden/cm als Dekorfläche aufgedruckt. Nach dem Antrocknen wird auf die Dekorfläche das Muster aus einem pastenförmigen Seidenmattplatinpräparat unter Verwendung eines Polyestergewebes mit 100 Fäden/cm als Drucksieb gedruckt. Zum Schluß, nach dem Antrocknen des Seidenmattplatinpräparats, wird auf das Dekorbild ein Siebdrucklack durch ein Drucksieb aus Polyestergewebe mit 32 Fäden/cm aufgebracht. Ist der Siebdrucklack angetrocknet, so wird das Abziehbild auf einen Teller aus glasiertem Porzellan übertragen und bei etwa 820°C eingebrannt. Die erhaltene Edelmetall-Dekoration mit kontrastreichem Matt/Glanz-Effekt besteht aus glänzenden goldfarbigen und matten platinweißfarbigen Dekorelementen.

### Beispiel 4

Zur Herstellung eines keramischen Abziehbildes wird auf einen Träger aus gummiertem Papier eine pastenförmige Mischung aus einem Glanzplatinpräparat und einem Glanzpalladiumpräparat (Gewichtsverhältnis 1:1) als Dekorfläche unter Verwendung eines Drucksiebes aus Polyestergewebe mit 130 Fäden/cm aufgedruckt. Nach dem Antrocknen wird ein pastenförmiges Seidenmattgoldpräparat (Citron- gold) unter Verwendung eines Drucksiebes aus Polyestergewebe mit 100 Fäden/cm als Muster auf das Glanzplatin/Glanzpalladiumpräparat aufgedruckt. Nach dem Antrocknen des Seidenmattgoldpräparats wird dann auf das Dekorbild ein Sieb- drucklack durch ein Drucksieb aus Polyestergewebe mit 32 Fäden/cm aufgebracht. Ist der Siebdrucklack angetrocknet, so wird das Abziehbild auf einen Teller aus glasiertem Porzellan übertragen und bei etwa 820°C eingebrannt. Die erhaltene Edelmetall-Dekoration mit kontrastreichem Matt/Glanz-Effekt besteht aus glänzenden platinfarbigen und matten citrongoldfarbigen Dekorelementen.

## Patentansprüche

1. Verfahren zum Dekorieren von silicatischen Gegenständen mit Edelmetall in Form eines gemusterten Dekors unter Aufdrucken eines Glanzedelmetallpräparats und Brennen, dadurch gekennzeichnet, daß auf die Gegenstände direkt oder über ein Abziehbild das Glanzedelmetallpräparat in die Dekorfläche bedeckender Weise und auf die Dekorfläche ein Seidenmattedelmetallpräparat als Muster aufgebracht und die Gegenstände bei 500 bis 900°C gebrannt werden.

2. Verfahren zum Dekorieren von silicatischen Gegenständen mit Edelmetall in Form eines gemusterten Dekors unter Aufdrucken eines Glanzedelmetallpräparats und Brennen, dadurch gekennzeichnet, daß auf die Gegenstände direkt oder über ein Abziehbild ein Seidenmattedelmetallpräparat in das Muster bildender Weise und das Glanzedelmetallpräparat in das Muster und die Dekorfläche bedeckender Weise aufgebracht und die Gegenstände bei 500 bis 900°C gebrannt werden.

3. Verfahren nach Anspruch 1 oder 2, dadurch gekennzeichnet, daß als Glanzedelmetallpräparat ein Glanzgoldpräparat, Glanzplatinpräparat oder Glanzplatin/Glanzpalladiumpräparat verwendet wird.

4. Verfahren nach einem der Ansprüche 1 bis 3, dadurch gekennzeichnet, daß als Seidenmattedelmetallpräparat ein Seidenmattgoldpräparat oder Seidenmattplatinpräparat verwendet wird.

5. Verfahren nach einem der Ansprüche 1 bis 4, dadurch gekennzeichnet, daß als Glanzedelmetallpräparat ein Glanzgoldpräparat und als Seidenmattedelmetallpräparat ein Seidenmattplatinpräparat verwendet wird.

6. Verfahren nach einem der Ansprüche 1 bis 4, dadurch gekennzeichnet, daß als Glanzedelmetallpräparat ein Glanzplatinpräparat und als Seidenmattedelmetallpräparat ein Seidenmattgoldpräparat verwendet wird.

7. Keramisches Abziehbild mit einer Edelmetall-Bildschicht für die Anwendung in dem Verfahren nach Anspruch 1 oder einem der Ansprüche 3 bis 6, dadurch gekennzeichnet, daß die Bildschicht aus einer Dekorflächenschicht aus dem Glanzedelmetallpräparat und einer darauf befindlichen Musterschicht aus dem Seidenmattedelmetallpräparat besteht.

8. Keramisches Abziehbild mit einer Edelmetall-Bildschicht für die Anwendung in dem Verfahren nach Anspruch 2 oder einem der Ansprüche 3 bis 6, dadurch gekennzeichnet, daß die Bildschicht aus einer Musterschicht aus dem Seidenmattedelmetallpräparat und einer darüber befindlichen Dekorflächenschicht aus dem Glanzedelmetallpräparat besteht.

## Claims

1. A method for decorating silicate objects with precious metal in the form of a patterned decoration by printing on a bright precious metal preparation and firing, characterised in that - directly or via a decal - the bright precious metal preparation is applied onto the objects in a manner covering the decorative surface and a satin matt precious metal preparation is applied onto the decorative surface as a pattern and the objects are fired at 500 to 900°C.

2. A method for decorating silicate objects with precious metal in the form of a patterned decoration by printing on a bright precious metal preparation and firing, characterised in that - directly or via a decal - a satin matt precious metal preparation is applied onto the objects in a manner forming the pattern and the bright precious metal preparation is applied in a manner covering the pattern and the decorative surface, and the objects are fired at 500 to 900°C.

3. A method according to Claim 1 or 2, characterised in that a bright gold preparation, bright platinum preparation or bright platinum/bright palladium preparation is used as bright precious metal preparation.

4. A method according to one of claims 1 to 3, characterised in that a satin matt gold preparation or satin matt platinum preparation is used as satin matt precious metal preparation.

5. A method according to one of Claims 1 to 4, characterized in that a bright gold preparation is used as a bright precious metal preparation and a satin matt platinum preparation is used as satin matt precious metal preparation.

6. A method according to one of Claims 1 to 4, characterized in that in that a bright platinum preparation is used as a bright precious metal preparation and a satin matt gold preparation is used as a satin matt precious metal preparation.

7. A ceramic decal with a precious metal image layer for application in the method according to Claim 1 or in one of Claims 3 to 6, characterized in that the image layer consists of a decorative surface layer of the bright precious metal preparation and of a pattern layer, situated thereon, of the satin matt precious metal preparation.

8. A ceramic decal with a precious metal image layer for application in the method according to Claim 2 or in one of Claims 3 to 6, characterized in that the image layer consists of a pattern layer of the satin matt precious metal preparation and of a decorative surface layer, situated thereabove, of the bright precious metal preparation.

## Revendications

1. Procédé de décoration d'objets silicatés avec un métal précieux sous la forme d'un décor à motif par application d'une préparation de métal précieux brillant et par cuisson, caractérisé en ce qu'on dépose - directement ou par l'intermédiaire d'une image à décalcomanie - sur les objets la préparation de métal précieux brillant de façon recouvrant la surface de décor et une préparation de métal précieux satiné comme motif sur la surface de décor, et qu'on cuit les objets entre 500 et 900°C.

2. Procédé de décoration d'objets silicatés avec un métal précieux sous la forme d'un décor à motif par application d'une préparation de métal précieux brillant et par cuisson, caractérisé en ce qu'on dépose - directement ou par l'intermédiaire d'une image à décalcomanie - sur les objets une préparation de métal précieux satiné de façon formant le motif et la préparation de métal précieux brillant de façon recouvrant le motif et la surface de décor, et qu'on cuit les objets entre 500 et 900°C.

3. Procédé selon la revendication 1 ou 2, caractérisé en ce qu'on utilise comme préparation de métal précieux brillant une préparation d'or brillant, une préparation de platine brillant ou une préparation de platine brillant/palladium brillant.

4. Procédé selon l'une quelconque des revendications 1 à 3, caractérisé en ce qu'on utilise comme préparation de métal précieux satiné une préparation d'or satiné ou une préparation de platine satiné.

5. Procédé selon l'une quelconque des revendications 1 à 4, caractérisé en ce qu'on utilise comme préparation de métal précieux brillant une préparation d'or brillant et comme préparation de métal précieux satiné une préparation de platine satiné.

6. Procédé selon l'une quelconque des revendications 1 à 4, caractérisé en ce qu'on utilise comme préparation de métal précieux brillant une préparation de platine brillant et comme préparation de métal précieux satiné une préparation d'or satiné.

7. Image à décalcomanie en céramique présentant une couche d'image de métal précieux pour l'application dans le procédé selon la revendication 1 ou selon l'une quelconque des revendications 3 à 6, caractérisée en ce que la couche d'image est composée d'une couche de surface de décor constituée de la préparation de métal précieux brillant et d'une couche à motif se trouvant sur cette dernière, constituée de la préparation de métal précieux satiné.

8. Image à décalcomanie en céramique présentant une couche d'image de métal précieux pour l'application dans le procédé selon la revendication 2 ou selon l'une quelconque des revendications 3 à 6, caractérisée en ce que la couche d'image est composée d'une couche à motif constituée de la préparation de métal précieux satiné et d'une couche de surface de décor se trouvant sur cette dernière, constituée de la préparation de métal précieux brillant.
